# EUROPEAN PATENT APPLICATION

(11) **EP 4 192 047 A1**
(43) Date of publication of application: **07.06.2023**
(21) Application number: 21211843.4
(22) Date of filing: 01.12.2021
(51) Int. Cl.: H04W 4/30, H04W 4/80, H05B 47/19, H05B 47/105, H05B 47/115, H05B 47/20, F21V 23/04, H04L 12/66, H04W 4/70, H04W 84/18, H04W 88/16, H04L 43/10, H04L 69/28

(54) **INFRASTRUCTURAL LIGHTING SYSTEM AND METHOD FOR DYNAMICALLY ADJUSTABLE ON-DEMAND LIGHTING**

(71) Applicant: BIOT Sp. z o.o., 66-002 Zielona Gora (PL)
(72) Inventor: Lewandowski, Wojciech, 65-124 Zielona Gora (PL)
(74) Representative: Gornicki, Pawel

(57) **Abstract**

The infrastructure lighting system includes loT controllers (2.xx) integrated with the luminaires (1) or installed on the luminaire (1), motion detectors (3.x) and IoT network gateways (5.X), wherein IoT gateway (5.X) contains at least two radio communication modules operating in the IEEE802.15.4 standard, while the loT controller (2.xx) includes a radio communication module in the IEEE802.15.4 standard, equipped with a processor and a lighting fixture control interface, wherein each loT gateway radio communication module (5.X) is a node of its own short-range radio network Sx in the mesh topology, and the other nodes of this local radio network in mesh topology S, are radio communication modules of loT controllers (2.xx) and information sent in the local radio mesh network (Sx) can be redirected, via the IoT network gateway (5.X), to another local radio mesh network Sx, of the same loT gateway (5.X), as well as to the Central Management System (CMS), installed on computing cloud (7) or on a dedicated server, via the Internet or long-range communication module. The subject of the invention is also a method of controlling adaptive lighting in the infrastructure lighting system according to the invention.

## Description

The subject of the invention is an infrastructural lighting system, in particular dynamically adjustable on-demand (shortly: adaptive) lighting, intended for lighting roads, streets, park alleys, bicycle paths or extensive parking spaces. The subject of the invention is intended especially for adaptive lighting management, requiring a quick response of local devices to data from sensors located in the system's operation area.

The idea of adaptive lighting is that the lighting follows a moving object, with the area directly in front of the object being illuminated more intensely than the area behind the object. The method of street lighting management significantly reduces the total cost of energy consumption. The use of adaptive lighting allows to reduce the luminous flux in selected areas to the level required by the system supervisors, while technically it is possible to reduce the luminous flux down to 10% of the nominal value, and quickly illuminate the area in which movement has been detected for its duration. Traffic safety requires that motion sensors act not only on the luminaire in which they are installed, but on a certain number of required luminaires, usually 5 to 30 luminaires, depending on environmental factors and the maximum permissible speed of movement in the controlled area. For efficient management of adaptive lighting, reliable and fast communication is necessary, allowing for very efficient local management. Considering that in urban traffic, for example in housing estates, speed limits are up to 30-40 km/h, which corresponds to 8.34-11.2 m/s, and the luminaires are spaced every 30 m on average, the vehicle travel time between the luminaires is from 2 to 3 seconds. It is assumed that for the safety and comfort of traffic, at least 15 luminaires should light up, of which 5 behind the object and 10 in front of the object, and at the same time the illumination should be as little noticeable to the driver as possible. Therefore, it can be assumed that the system should work in less than 2 seconds. As the speed of moving objects increases, the requirements for the system become more restrictive.

Most of the known solutions do not allow for technically and economically effective organization and management of adaptive lighting. Solutions supported by communication via long-range networks, such as subscriber networks in 2G/3G/4G/5G technologies, are technically expensive as well as very expensive to operate, due to the need for a subscription fee for a sim card in each device associated with each luminaire belonging to system. The use of 2G/3G/4G/5G technology, in particular 4G-LTE and 5G, allows for the transmission of a large amount of data, while the problem may be ensuring low total latency, i.e. the time required from sending a signal from the sensor to receiving the message in executive devices. Besides, the 2G/3G/4G technology is completely dependent on the central management system, hereinafter referred to as CMS, and any failure in the operator network or server failure will disables the system. The solution using the 2G/3G/4G technology is also sensitive to the consumer traffic load, so in the case of increased telephone traffic, for example during mass events, concerts, cultural events, holidays, the system may be blocked for many hours.

Solutions supported by LTE cat. M.1, especially NBIoT, do not guarantee a sufficiently low latency, although the NBIoT technology is clearly more resistant to the load of consumer traffic. The use of these technologies forces the centralization of decisions at the CMS level, so they make the functioning of lighting dependent on both communication and the operation of the CMS.

The use of radio communication in the 2.4 GHz frequency band may be an alternative. In a star topology network using the 2.4 GHz frequency for communication, direct communication between devices is not possible. In this case, the signal from the sensor must be sent to the network hub, and from there to the executive devices. The advantage of such a solution is independence from the CMS system, which is not involved in the decision-making process, thus eliminating communication in the telecom area. The system can make decisions locally and therefore has low latency and, furthermore, full bandwidth utilization. Radio communication in the 2.4 GHz frequency band has the disadvantage that the range of a single device can in theory reach 1000 m, but practically in optimal conditions it is 400-600 m, which significantly limits the number of supported devices and the territorial area for the system. In order to eliminate the influence of the buildings, the hub/gate must be placed in such a way as to ensure optical visibility between the concentrator and each installed device, which causes additional investment costs.

Greater range can be achieved by using communication in the sub-GHz band. For the LORA standard, the range of individual devices reaches 5-7 km, but the bandwidth usage, both for end devices and hubs, is normatively limited to 1%. Restraining the bandwidth usage limits the maximum number of messages that each device can send per day to about 140 messages. Due to these limitations, communication in the sub-GHz band is not applicable in the adaptive lighting design, as it does not provide the required traffic density (in terms of communication frequency) and thus the required traffic safety.

Full use of the band and greater range can be achieved using radio communication in the 2.4 GHz band with support of a mesh topology. The mesh network is built on the basis of 3 essential types of devices: steering devices - controllers - taking the role of a "child", steering devices taking the role of "parent" (mesh routers), and a network gateway configuring the network and ensuring its connection with the "world" via long-range communication - subscriber network or wired connection to Ethernet. The role of the "child" or "parent" router is taken over by the network nodes automatically, whereas each of them constitutes a controller associated with the luminaire, motion sensor or luminaire equipped with a sensor. In a mesh topology network, the messages sent by the sensor can be transmitted through subsequent mesh routers, thanks to which the actual communication range is significantly extended. The limitation of this solution is the number of devices that can be organized in the local mesh network. The use of a mesh network for communication in the lighting system allows for direct communication between the elements managing the lighting fixtures - controllers and traffic detectors with each other, which, combined with the relatively large network capacity resulting from the band used, allows for communication with neighbors in the shortest possible time, and thus meets requirements for the adaptive lighting management system. Mesh topology network is therefore suitable for a tracking lighting management system for a limited number of smart lighting elements located in a limited area, but it is not suitable for managing adaptive lighting over a large area, for example throughout the city. Although smart lighting elements organized in a local network in mesh topology may work properly, on the border of adjacent areas, where smart lighting elements are organized into their own local networks, communication "holes" will arise.

The european patent specification EP3018977B1 discloses a lighting network consisting of multiple lamps each equipped with a control module and a server, characterized in that the network comprises one or more groups of lamps, each lamp being equipped with a control module for controlling the lighting, and each group has a control module specified as its group controller. The group controller communicates with the server via the long-range communication module. The other control modules communicate with each other and the group controller via the short-range communication module, while with the server they communicate through the group controller, wherein each control module being able to function as a group controller. The control module for controlling the lighting of the lamp consists of a long-range communication module, a short-range communication module, a geolocation module, a controller, at least one sensor and a control output for controlling the light controller from the server, accessible via a long-range communication module, wherein the control module is designed to transmit environmental, light and/or control module information to the server.

The European patent specification EP 3017661B1 discloses a system consisting of controllers equipped with a short-range communication module according to IEEE802.15.4 and a long-range communication module in GPRS, UMTS or LTE technologies and dedicated central software, where the controller can operate in the edge router mode, communicating with to the central system via the long-range module and to adjacent controllers via the short-range module. After installing devices that report their position based on GPS location and long-range communication, the central system, after knowing the location of all connected devices, may issue a command to turn off the long-range communication module to selected controllers. These controllers then communicate with the system through edge gateways in which both communication systems are active.

British patent GB2582810A discloses a method of installing a mesh system dedicated, for example, to the management of urban lighting infrastructure. The mesh nodes of this description also include communication modules for carrying out mesh communication according to the IEEE802.15.4 protocol, respectively, and an Ultra-low Narrow Band UNB communication module which allows communication with base stations up to several kilometers away. When establishing a network, the controllers, using the UNB network, report their GPS position to the central management system, and check what mesh subnets are possible to build. On this basis, the mesh access point function is allocated, which is used to transfer information about the network to the central system through the system gateway, communicating on the one hand with devices via UNB communication, and on the other hand with the system via another link, by default in long-range GPRS, UMTS, LTE or wired technology.

British document GB2578746A describes a monitoring system composed of a central unit and edge devices to which external sensors can be connected, for example: a camera, a motion sensor, an RFID sensor, which devices have a functional connection with the central unit via a wired or radio link using communication dedicated to this solution or other technology existing within Smart City. The edge node receives data from the sensors and stores them in memory, and may send certain data to the central system according to a predefined algorithm or upon the request of the central system.

The aim of the solution according to the invention was to develop an infrastructure lighting system and a method of controlling this system, meeting the current and future requirements of cities and road managers, by providing the most complete solution possible, ensuring cost reduction of using the lighting system, and at the same time ensuring a high level of safety, by maintaining continuous communication via a short-range radio network in mesh topology over a large area. This requires overcoming the limitations related to the small range of the mesh topology radio network by ensuring communication between neighboring networks that exceeds the barrier generated by typical mesh networks related to its boundaries.

At present, sufficient reactivity of the infrastructure lighting system can only be ensured by the use of local networks for communication in mesh topology, in the 2.4GHz band, or higher, in accordance with the IEEE802.15.4 standard, in which it is possible to communicate with each other, as well as communication elements of the infrastructure lighting system with the lighting Central Management System CMS via loT gateways. The reliability of the network operation is achieved by the use of at least two active loT gateways in each local network in the mesh topology, while maintaining the continuity of communication at the border of the coverage areas of adjacent mesh networks has been achieved through the use of the loT gateway, which supervises many local mesh networks and enables the transfer of information between gateway supervised local mesh networks. The loT gate, which is also fully active in each of the supervised local mesh networks, ensures full security, because all transmitted data is encrypted, and network nodes sending and receiving information are authenticated.

The infrastructure lighting system, according to the invention, is characterized by the fact that it includes loT controllers (2.xx) integrated with the lighting fixtures or installed on the lighting fixture using dedicated, standardized sockets, motion detectors, and system operation devices and IOT network Gateways, whereby the loT gateway contains at least two radio communication modules operating in the IEEE802.15.4 standard, while the loT controller includes a radio communication module in the IEEE802.15.4 standard, equipped with a processor and a luminaire control interface in the 1-10V standard, digital in DALI standard, or universal operating in one of the indicated modes, with each loT gateway radio communication module operating in the IEEE802.15.4 standard is a node of its own, independent, local short-range radio network in the mesh Sx topology, and the other nodes of this local radio network in the mesh topology Sx, are communicated with it via radio communication modules in the IEEE802.15.4 standard of loT controllers. Information sent in the local mesh radio network can be redirected, via the loT gateway, to another local mesh radio network, created by another radio communication module in the IEEE802.15.4 standard of the same loT network gateway, and to the Central Management System (CMS), installed in a computing cloud or on a dedicated server, via the Internet or a long-range communication module.

Preferably, the motion detector is designed to inform the controllable element of the lighting fixture or the loT controller that motion has been detected in the monitored area.

Preferably, the loT controller is designed to count off clock time and solar time for any given location.

Preferably, the loT controller is designed to store multiple, at least ten individual schedules for the lighting fixtures operation, wherein each schedule being defined in clock, solar or mixed time.

Preferably, the loT controller is associated with an illuminance sensor.

Preferably, the controller is integrated with the illuminance sensor.

Preferably, the loT controller is equipped with a power supply parameter measurement system, which measurement system provides the CMS with information containing the actual power supply parameters of the luminaire, such as: current consumed, supply voltage, active power, reactive power, apparent power, cumulative active energy, cumulative reactive energy, power factor, frequency and detected emergency states based on the actual power supply parameters of the system components.

Preferably, the measurement error of the power parameter measurement system is no greater than 1 percent of the measurement range.

Preferably, the controller is equipped with a relay for turning the light fitting on and off.

Preferably, the controller is equipped with a GPS module.

Preferably, the controller is equipped with a long-range communication module in the 2G, 3G, 4G, 5G technologies.

Preferably, the loT gateway comprises a long-range communication module in the 2G-GPRS or 3G-UMTS or 4G-LTE standard.

Preferably, the loT gateway comprises 2 to 6 radio communication modules conforming to the IEEE802.15.4 standard.

Preferably, the loT gateway is mounted on a light pole or in a lighting cabinet.

Preferably, the operating device for the infrastructure lighting system is a laptop, tablet or mobile phone, equipped with a web browser or a mobile application.

The operation method of the infrastructure lighting system assumes three cascading levels of management. The first level is the autonomous edge management implemented at the controller level, the second level is implemented in the local mesh network, which may also include a mesh gateway, while the third level is carried out by the Central Management System (CMS), with each subsequent level extending the system functionality - the number of available functions is greater on each successive level of management.

The above-described organization of decision-making in the infrastructure lighting system makes the operation of lighting independent from the operation of individual elements of the management system. For example, during a failure of the Central Management System (CMS) or long-range communication, the second and first levels remain active. A failure of the second level is unlikely; however, it may happen that the luminaire with the controller is outside the radio communication range of the local network and then the controller remaining outside the system takes over control of the luminaire.

A particularly important feature of the infrastructure lighting system is that from the beginning it has been designed to operate autonomously, which means that in static mode, when no response to external signals is required, the system is only used for status reporting and updating of the luminaire's operating curves - if the user determines such a need.

The controller includes a clock that is synchronized in the mesh network in between all devices and via the gateway against the server time. Based on the calendar time and latitude, the controller calculates the solar time. The knowledge of the clock time and date allows it to choose the right work schedule for each day of the year and the implementation of the schedule defined in the clock time, while the knowledge of sunrise and sunset times allows it to implement a relative schedule, and the knowledge of both times allows you to choose any schedule, including a schedule where some points are defined in clock time and some in solar time. The possibility of defining the schedule in clock, solar or mixed time means that the resulting number of static schedules does not have to be very large. Due to the fact that the controller stores in its memory many different schedules adapted to the expected mode of operation for different days, weeks, months, as well as exceptions to the mode of operation on certain days, it is possible to work completely autonomously for several months or even years.

The method of dynamic lighting operation, in particular adaptive lighting, is based on very fast communication within the mesh network related to the controller, and in networks associated with network gateways, and on the knowledge of the availability of controllers, in particular controllers to which motion detectors are connected. The knowledge of the availability of the controllers is built on the basis of the information referred to as "life signal" sent by each controller in a defined time interval, preferably not longer than 3 minutes. Said "life signal" is sent by each controller and interpreted in the network associated with the controller by the network gateway, which sends this information to other networks if this is indicated by the assigned affiliations to the detector, and immediately sent to the CMS, which also interprets the data.

The adaptive lighting control method is based on the fact that for each loT controller associated with a lighting fixture or for a group of IoT controllers belonging to a specific motion detector, a response to the motion detector signal or from many motion detectors in the Central Management System (CMS) is defined, and then each loT controller, for which the response to the motion detector signal has been defined, determines the presence and activity of the motion detector on the basis of the information referred to as "life signal" sent by each loT controller in a defined time interval, preferably not longer than 3 minutes, the said "life signal" sent by the loT controller is interpreted in the network associated with the loT controller and by the loT gateway, which sends this information to other local mesh networks managed by this loT gateway, as well as to the Central Management System (CMS), if this is the result of affiliations assigned to this detector, and on the basis of signal from the motion detector, the loT controller triggers the action of switching the lighting from the idle state to the operating state, where both states are defined at the CMS system level, independently for each group of luminaires, as are the time intervals in which the adaptive lighting mode should be active.

Preferably, the controller, assigned to act on data from the motion detector, interprets the "life signal" from the controller physically associated with the motion detector and, in the absence of such a signal, switches the associated lighting fixture to an active state. This gives a guarantee of normative illumination of the area under each luminaire in the event that sensor data is potentially inaccessible due to detector, controller or mesh failure.

Preferably, the controller associated with the motion detector collects statistical information about the detector trigger density around the clock, while all controllers in which the adaptive mode is activated collect statistical data from the response density, which data is sent to the Central Management System (CMS) along with regular reports from the controller.

Preferably, the Central Management System (CMS) defines the rules of adaptive lighting in terms of parameters such as: operation hours of the adaptive mode, affiliation of groups of controllers to detectors, idle and active values in the adaptive mode, uphold time, detector deactivation time, projected speed of the objects movement.

Preferably, the CMS system informs the user by means of icons and alerts that he has not received the "life signal" information from the controller within no more than 7 minutes from the last information about the loT controller (2.xx) status.

The subject of the invention will be explained in more detail in an example of an embodiment in the drawing, in which fig. 1 shows a diagram of an infrastructure lighting system, fig. 2 illustrates a diagram of connections formed between controllers of an infrastructure lighting system, fig. 3 shows a simplified infrastructure lighting system on an enlarged scale, fig. 4 illustrates the operation of adaptive lighting in an infrastructure lighting system, Fig. 5 is a block diagram of an infrastructure lighting system controller supporting adaptive lighting, Fig. 6 is a block diagram of an loT gateway operation supporting adaptive lighting, Fig. 7 is a block diagram of an operational configuration of the adaptive lighting system, and Fig. 8 shows an infrastructure lighting system operating without the participation of a Central Management System CMS.

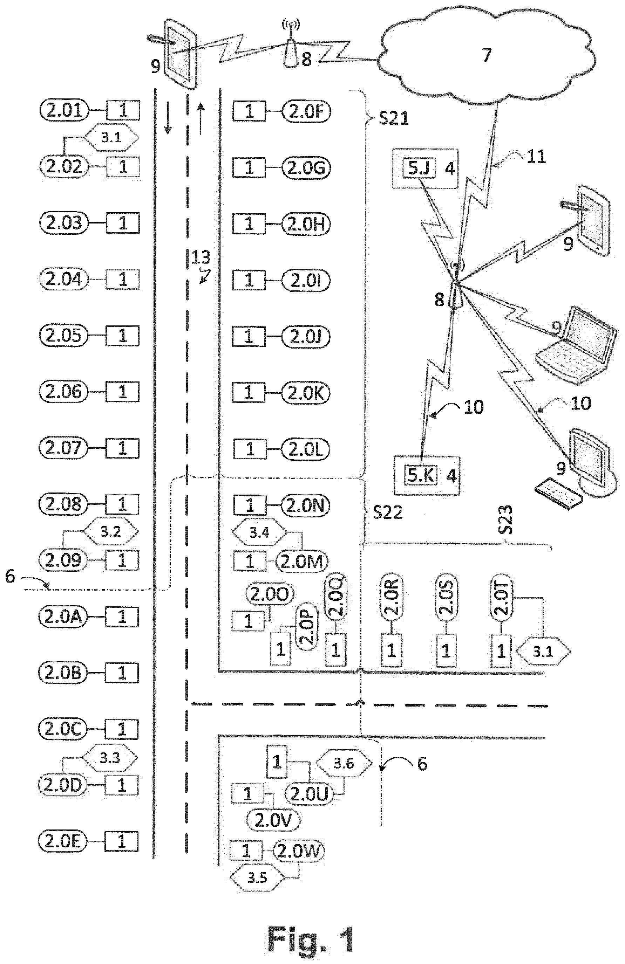

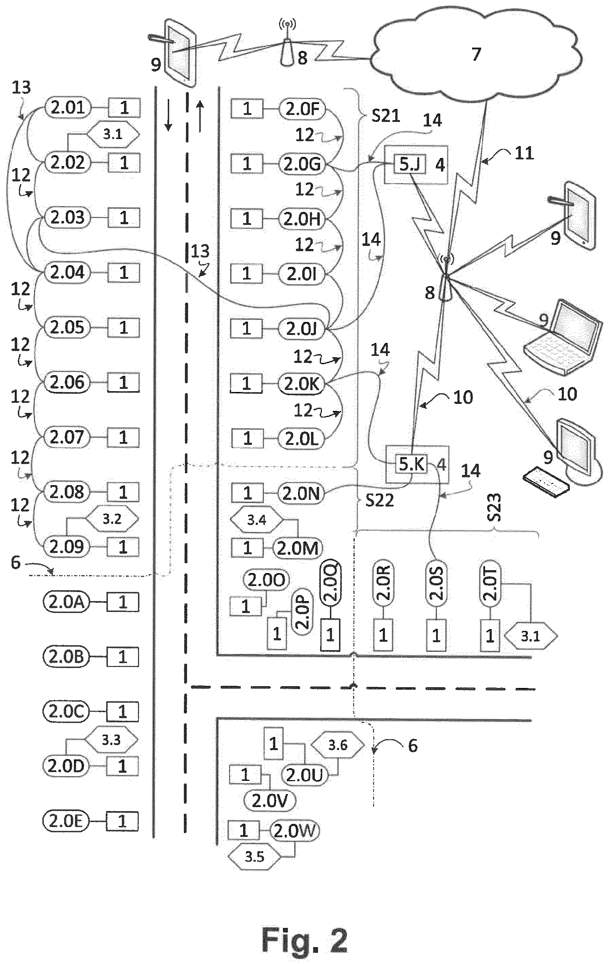

The infrastructure lighting system includes controllable lighting fixtures 1, loT controllers 2.xx, where xx stands for the individual marking of the controller, and IoT network gateways 5.X, where X stands for the individual marking of the gate, mounted in lighting cabinets 4. In the embodiment, each loT controller 2.xx is integrated with the lighting fixture 1 and electrically connected to it, the loT controller 2.xx includes an IEEE802.15.4 communication module with a processor, power supply, and a lighting fixture DALI control interface. The loT gateway 5.X contains at least two radio communication modules compliant with the IEEE802.15.4 standard. In an embodiment, the gateway 5.2 includes three radio communication modules. The selected luminaires 1 are physically connected to the motion detectors 3.x, which are electrically connected to the controllers 2.xx. Controllers 2.xx create between themselves and with the IoT gateway 5.X local networks of short-range radio connections in Sx mesh topology, where x is the number of the network. Fig. 2 shows exemplary close connections 12, remote connections 13, and connections 14 to network gateways 5.J and 5.K. Fig. 1 and Fig. 2 indicate the areas of the three local mesh networks S21, S22 and S23, marked with curly brackets and separated by lines 6, with the loT gateway 5.K being in three independent networks S21, S22 and S23, and the gateway network loT 5.J only participates in the S21 network.

The gateways 5.X establish a radio link 10 with the mobile station 8 via a long-range communication module. The mobile station 8 maintains a permanent connection 11 to a computing cloud 7 in which the Central Management System (CMS) is installed. The end devices for operating the infrastructure lighting system are desktop computers, portable computers or mobile devices such as a smartphone or tablet 9 together with the software running on them.

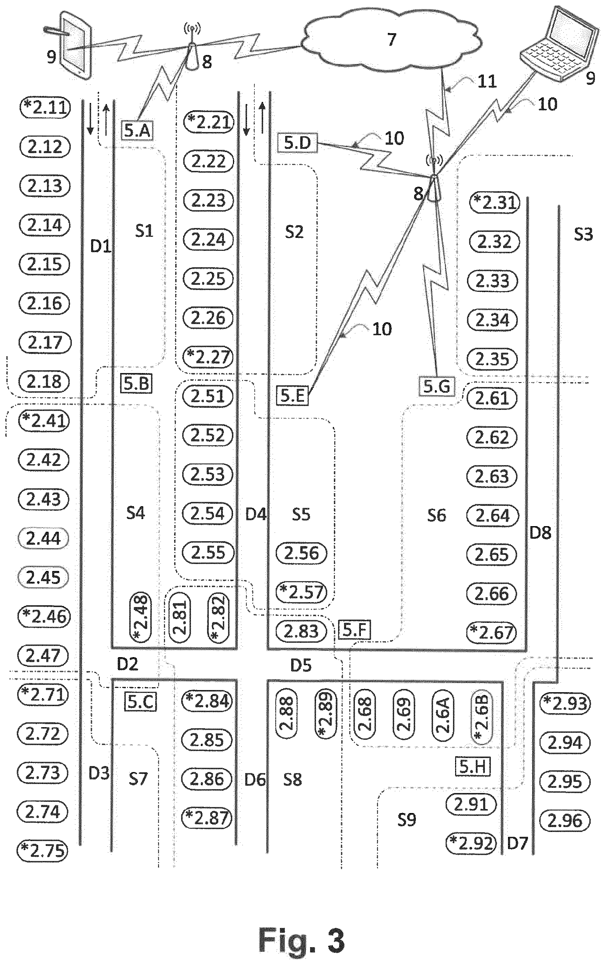

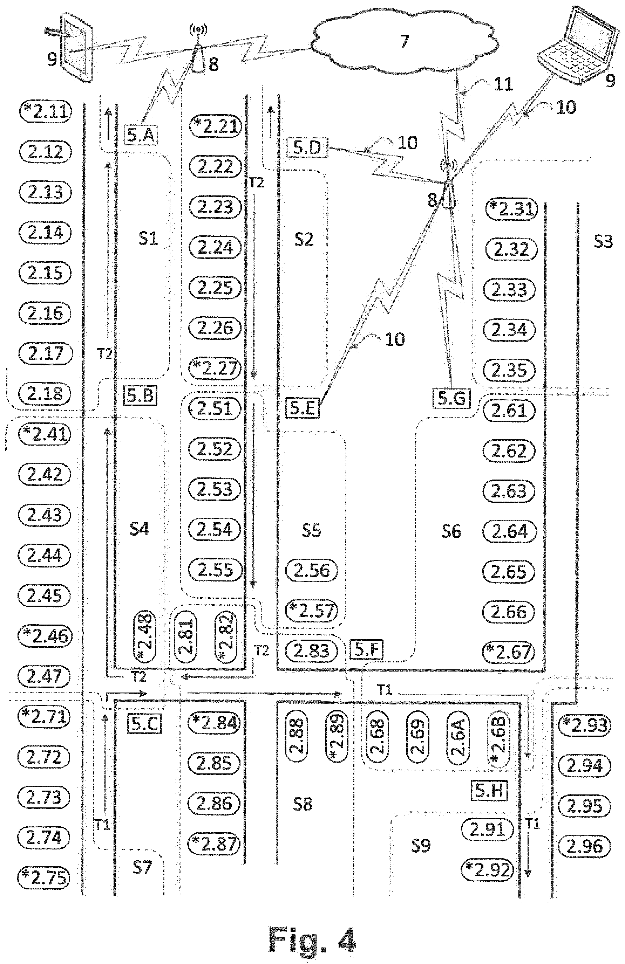

Fig. 3 shows a simplified diagram of the system on a larger scale, in which, for the sake of good drawing legibility, the shapes corresponding to the luminaires 1 connected to the corresponding controllers 2.xx and the motion sensors 3.x physically connected to the selected light fixture 1, and electrically connected to the corresponding controller 2.xx. have been omitted, In the simplified diagram, controllers 2.xx of lighting fixtures 1 with motion sensors 3.x connected are marked with the symbol "*" next to controller 2.xx designation, for example *2.11. Controllers 2.xx installed in lighting fixtures 1 create local short-range Sx radio networks, in mesh topology, building a system of connections with loT gates 5.X. The connection system in the Sx local networks is not shown in Fig. 3 so as not to obscure the drawing. The loT gateways 5.X establish a connection 10 with a mobile telephony base station 8, and through it with a CMS system in the cloud 7. Fig. 3 and Fig. 4 only show exemplary connections 10 between the gateway 5.X and the cellular telephony base station 8 in order not to lose legibility of the drawing.

Gate 5.A together with gate 5.B form a local network S1 with controllers from 2.12 to 2.18 and controller *2.11 which is connected to the motion sensor. Controller *2.11, and controllers from 2.12 to 2.18 are integrated with the corresponding lighting fixtures 1, installed on the D1 road.

Gate 5.B using the second short-range radio communication module, compliant with the IEEE802.15.4 standard, together with the gateway 5.C creates network S4 with controllers 2.42, 2.43, 2.44, 2.45 and controllers *2.41 and *2.46 connected to the motion sensor, located on the road D1, as well as with the controller *2.48 with a connected motion sensor, located on the road D2.

Gate 5.C, using the second short-range radio communication module, creates a network S7 containing controllers 2.72, 2.73, 2.74, and controllers *2.71 and *2.75 with a connected motion sensor, located on the road D3.

In addition, the gate 5.C, using the third short-range radio communication module, creates a common local network S8 with the gateway 5.F, which also includes the controllers 2.81 and *2.82, equipped with a motion sensor, mounted on the road D2, as well as the controllers 2.83, 2.88 and *2.89 equipped with a motion sensor, installed on the road D5, and controllers 2.85, 2.86 and controllers *2.84, *2.87 equipped with a motion sensor, installed on the road D6.

The gateway 5.F creates two more local networks using a second and third short-range radio communication module, respectively; with gateway 5.E it forms the network S5, while with gateway 5.H and gateway 5.G it forms the network S6.

Similarly, gate 5.E and gate 5.D form the network S2, while gate 5.G forms a standalone network S3.

Each of the motion sensors distributes information on motion detection in the local radio network, which is transmitted in the network and interpreted by the controllers assigned to the group of a given sensor.

The network association of the motion sensor with the corresponding luminaires is shown in Table 1 below.

**Table 1**

| **Number of the controller with the connected motion sensor** | **Number of the controller integrated with the lighting fixture** |
|---|---|
| *2.11 | From *2.11 to 2.18, and *2.41 i 2.42. |
| *2.41 | 2.18 and from 2.41 to 2.47 |
| *2.46 | *2.41 to 2.47 and *2.71, 2.48. |
| *2.71 | *2.71 to *2.75, and 2.47, *2.46, *2.48 |
| *2.75 | *2.71 to 2.75 |
| *2.48 | *2.48, 2.81, *2.82, 2.83, *2.84, 2.88, *2.71, 2.72, 2.47, *2.46, 2.45; |
| *2.82 | *2.48, 2.81, *2,82, *2.84, 2.85, 2.88, *2.89, 2.83 and *2.57 |
| *2.84 | *2.84 to *2.89, 2,83, *2.57, 2.81 and *2.82 |
| *2.87 | *2.84 to *2.87 |
| *2.89 | 2.81 to 2.85, *2.57, 2.88, *2.89, 2.68 to *2.6B |
| *2.6B | 2.88, *2.89, 2.66 to 2.6B, *2.93, 2.94; |
| *2.92 | 2.91 to 2.96 |
| *2.93 | *2.91 to 2.96, and 2.6A, 2.6B, 2,66, *2.67 |
| *2.67 | *2.31 to 2.35, 2.61 to *2.67; 2.6A, *2.6B, *2.93, 2.94 |
| *2.31 | *2.31 to 2.35, and 2.61 to *2.67, *2.6B, *2.93 |
| *2.57 | 2.51 to *2.57, 2.26, *2.27, 2.81 to 2.85, 2.88, *2.89 |
| *2.27 | *2.21 to *2.27, 2.51 to *2.57, 2.83 |
| *2.21 | *2.21 to *2.27, 2.51, 2.52 |

The presented configurations of connections of sensors *2.xx with controllers 2.xx show that they exceed the boundaries of the area of operation of local mesh networks, thanks to the fact that the gateway 5.X containing two or three short-range radio communication modules transmitting information between controllers 2.xx in adjacent Sx networks associated with this gateway 5.X. The presented configuration makes it possible to build a network for any area, regardless of the required number of devices, and to ensure maximum dynamics of operation thanks to the transmission of information at the local level, without the need to communicate with the CMS system.

The method of operation of adaptive lighting in the infrastructure lighting system according to the invention shown in Fig. 4 is that the vehicle following the route T1 triggers a motion sensor connected to the controller *2.75 which controls the connected luminaire and sends information to the mesh network about the detection event. Controllers belonging to the controller's *2.75 mesh network, after receiving a motion detection signal, switch on the "active" state in the connected lighting fittings and forward the information about motion detection.

The vehicle traveling further along the T1 route triggers the activation of a sensor connected to the controller *2.71, which again sets the slave luminaire into an active state for a given time and broadcasts information in the mesh network S7. This information is received by the other controllers 2.xx in the network S7 from 2.72 to *2.75 and by the gate 5.C, which checks if the traffic information should be forwarded to other networks belonging to gate 5.C, and after confirmation, gate 5.C, by means of the remaining short-range radio modules, broadcasts information about the detection of traffic in the network S4, in which the controllers *2.46 to *2.48 interpret this information and switch their luminaires from the rest state to the active state, while the *2.41 to 2.45 controllers ignore this information.

The vehicle then triggers the motion sensor assigned to the controller *2.48, triggering the procedure described above, where gateway 5.C broadcasting the information on the three subordinate networks S7, S4 and S8 where the controllers associated with the motion sensor connected to the luminaire *2.48 will switch state of the luminaires, while controllers to which the reaction has not been assigned will ignore the command.

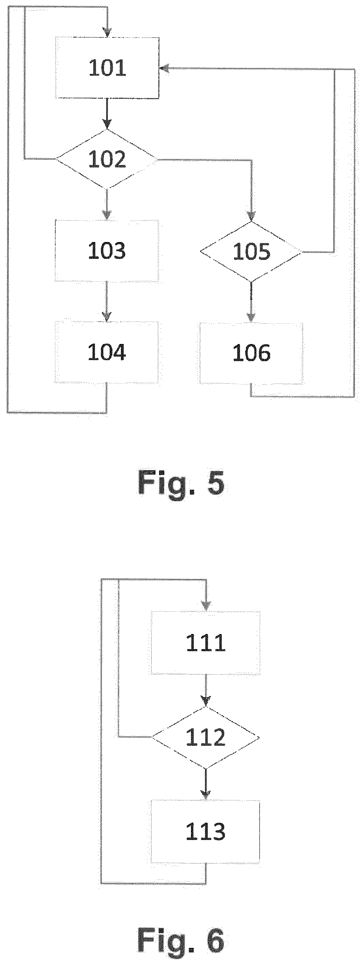

The way the infrastructure lighting system works is closely related to the way the loT controller works, which is illustrated in the block diagram of Fig. 5, and includes the following steps:

### Step 101

The loT controller 2.xx monitors the interrupt indicator, which is primarily responsible for the attached motion sensor 3.x, if the sensor is connected to the controller, and the local radio communication mesh network Sx. It counts down the time, verifies saved schedules with priorities by performing the function of edge control of the luminaire. In addition, the loT controller 2.xx sends a "life signal" at a defined time interval, monitors the status of the luminaire 1, and checks that the motion sensors 3.x associated with the controller 2.xx send regular "life signals" via the local mesh radio network Sx. In case the signal is available from all associated sensors 3.x, the loT controller 2.xx waits for information from sensors 3.x about motion detection. If at least one of the sensors 3.x related to the controller 2.xx does not report its presence in the required time, the loT controller 2.xx will take the action defined for this situation by the system operator via the CMS, for example switching the luminaire 1 from the standby state to the active state.

### Step 102

If an interruption is detected, the loT controller 2.xx recognizes the source of the notification, among which the most important from the point of view of adaptive lighting are: interruption from the connected motion sensor 3.x, and interruption from the radio network through which information about motion detected by the sensor 3.x is provided to the controller linked to the controller via the local radio communication mesh network Sx.

### Step 103

In case when the interrupt comes from the motion sensor 3.x connected to the loT controller 2.xx, the controller switches the luminaire 1 from the rest state to the active state.

### Step 104

The loT controller 2.xx sends the motion detection information to the local radio communication mesh network Sx, giving the unique number of sensor 3.x and the detection time stamp, and returns to the operation described in step 101.

### Step 105

For motion detection, when the interrupt in step 102 originates from the local mesh Sx, the loT controller 2.xx checks to see if it is assigned a response to a unique sensor 3.x signal; if not, returns to the action described in step 101, if yes, checks the required type of response:
1. Transmission of a motion detection signal to subsequent nodes of the local radio communication mesh network Sx - loT controllers 2.xx,
2. The change of the luminaire's 1 operating mode understood as switching from the idle state to the active state and the transmission of traffic detection information to subsequent nodes of the local radio communication mesh network Sx.
3. Changing the operating mode of the luminaire 1, understood as switching from the standby state to the active state, without further propagation of information about motion detection,
and then the loT controller 2.xx goes to step 106.

### Step 106

The loT controller 2.xx carries out activities in accordance with the type of required response to the signal of a unique sensor 3.x. The loT controller 2.xx counts the number of received commands and the number of performed switchings from the standby state to the active state for a defined time interval, which can be from 10 minutes to 1h. The collected data will be sent to the CMS in step 1 along with the standard reports of the controllers. After execution of step 106, the loT controller 2.xx returns to monitoring the operation of the luminaire 1 and the local radio communication mesh network Sx, described in step 101.

The controller operation described above is limited to the area of one local mesh network. To overcome the limitation of a single network, an loT gateway 5.X is needed, designed to connect local loT networks. The connection of adjacent local mesh networks takes place through the loT gateway 5.X, through dedicated short-range radio communication modules. The loT gateway 5.X supports many, at least two local mesh networks Sx, and is permanently present in each of the subordinate Sx networks through a radio communication module dedicated to a given Sx network.

The way the loT gateway 5.X works is as follows:

### Step 111

The loT gateway 5.X supervises the subordinate local Sx radio communication networks through dedicated short-range radio communication modules, records relevant information from the network Sx, distributes the current calendar time appropriate to the installation site and communicates with the CMS system to provide up-to-date information for the system observer, as well as to transmit commands defined by the system operator to subordinate Sx networks and verifies information from subordinate SX networks. In addition, it sends reports generated by the controllers and transmits to the CMS "life signals" generated by the controllers, thanks to which the system "understands" the current state of the Sx network and devices belonging to the Sx network.

### Step 112

In the case of obtaining information about motion detection in one of the subordinate local radio communication mesh networks Sx, the loT gateway 5.X verifies whether in other Sx networks subordinate to it there are loT controllers 2.xx with an assigned reaction to the motion sensor 3.x reporting activity. If, as a result of the verification, it turns out that in other subordinate Sx networks there are no loT controllers 2.xx with the assigned reaction, the loT gateway 5X ignores this information and returns to the basic operation described in step 1.

### Step 113

If, on the other hand, it turns out that there are loT controllers 2.xx with an assigned response to the motion sensor 3.x reporting activity, the loT gateway 5.X transmits this information via short-range radio modules specific to the Sx networks, where the information should be disseminated.

The CMS system enables flexible configuration of the previously described behaviors.

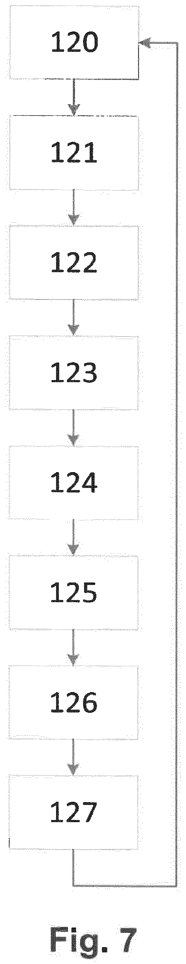

The method for configuring the operation of an infrastructure lighting system, illustrated in the block diagram in Fig. 7, includes the following steps:

### Step 120 - Preparation for lighting operation configuration

After installing the devices and connecting them to the appropriate local radio communication mesh network Sx, the system presents all devices on a map background, which is the starting point for the configuration of lighting operation, including the configuration of devices to work in adaptive mode.

### Step 121 - Preparation for loT controllers 2.xx configuration

First, the loT controllers 2.xx associated with controllable luminaires 1 are configured into groups affected by motion detectors 3.x. Several motion detectors 3.x can be connected to each such group. If the motion sensors 3.x have different impact zones, an appropriate group must be created for each impact zone.

### Step 122 - Defining the configuration parameters for the loT controllers 2.xx

In the next step, the following parameters are defined for a given group:
- vehicle speed,
- the average distance between the lighting fixtures,
- idle and active state of luminaires,
- the number of not received life signals, which the controller will interpret as the lack of a sensor in the system,
- time parameters in the sense of: dates and times; adaptive lighting mode activation and deactivation.
- operating mode which the controller should activate in case of interpreting the lack of a sensor in the system.
- Number of not received life signals after which the controller will report the motion sensor unavailability error to the CMS system.
- time to maintain the lighting after receiving a signal about the activity of the motion sensor,
- time interval in which the controller will count up the amount of traffic activity information received from the network.

### Step 123 - Saving of loT controllers 2.xx configuration

Saving the group configuration will allow the defined behaviour to be sent to the loT controllers 2.xx belonging to the group.

### Step 124 - Preparation for motion sensors 3x operation configuration

Configuration of the operation of motion sensors 3.x can be done in two ways: by configuring each sensor 3.x separately or by assigning the configuration to a group of sensors 3.x. While configuring each sensor 3.x individually gives the greatest flexibility, for larger installations it will result in a multitude of configurations and make configuration management difficult. For this reason, it is recommended to create groups and configure each sensor 3.x by assigning the configuration to the sensor 3.x group, even if some groups contain only one sensor 3.x. In the future, the group can be easily expanded while keeping the original configuration.

### Step 125 - Configuring the motion sensors 3.x operation

The configuration of the 3.x sensor group is performed when all sensors 3.x are to operate in the same way. If different configurations are required, then a separate sensor 3.x group must be created for each configuration.

The configuration of the motion sensors 3.x operation consists in saving the following parameters in the configuration menu:
- "inactive" time - the time when the data from the sensor is ignored - this is the time when the sensor 3.x works and detects motion, and the loT controller 2.xx counts these calls, but does not affect the connected luminaire 1, and does not propagate these calls data in the Sx network. This allows you to build traffic density statistics that can be used by the system or operator to modify the adaptive time settings in the system or in its areas.
- The "dead" time is a short period of time immediately after the detection of motion in which the motion data from the sensor is ignored, it may be, for example, the same object that triggered the repeated activation of the sensor leaving its detection area.
- the time interval in which the controller physically connected to the sensor 3.x will count the number of motion detections from the sensor 3.x both in the active and inactive time of the adaptive lighting mode in order to send this information as part of regular reports to the CMS system.

### Step 126 - Saving sensor 3.x configuration data

After completing the configuration, the configuration data should be saved under a unique name, which allows you to use the saved configuration data to configure other sensor 3.x groups.

### Step 127

### Sending device configuration data

After completing the configuration, the CMS system will automatically send the configuration data to all configured devices.

After completing the configuration, the system will go to the basic operation mode consisting in downloading, collecting and informing the user about the current way the system operates, device availability, alarm notifications, it will also allow you to observe the history of events, including those related to the operation of the system in a adaptive mode, analysis of collected statistical data, which data can be used by the system or the operator to modify the system's adaptive settings.

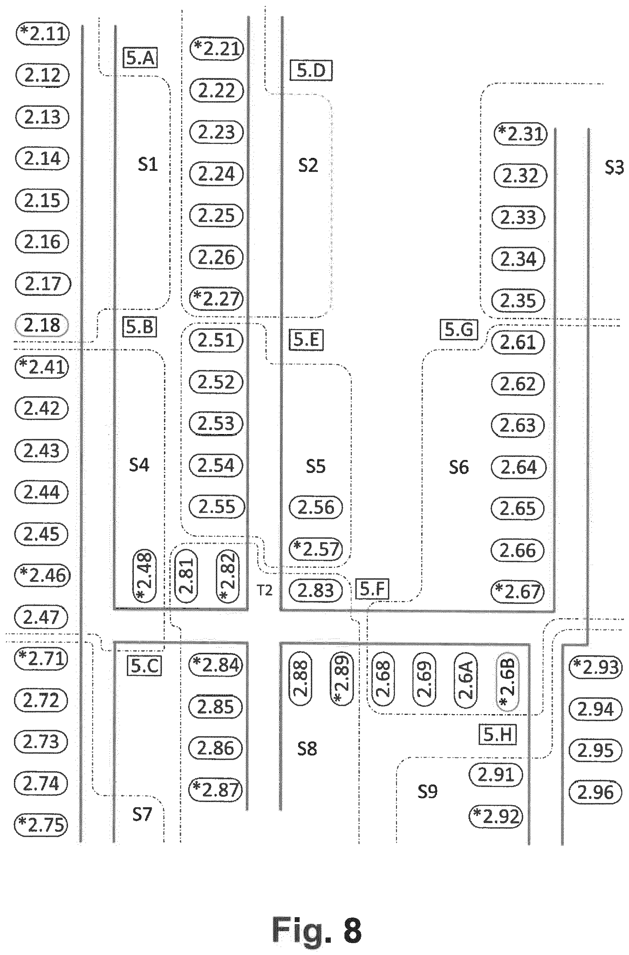

In another embodiment of the invention, shown in Fig. 8, the infrastructure adaptive lighting system works without the participation of the CMS. During commissioning and configuration, the whole process is exactly the same as described above, however, after configuring the system, the connection 10, 11 of loT gateways 5.X to the CMS cloud computing 7 is terminated. This can be done by physically removing SIM cards installed in loT gateways 5.X, manual deactivation of the cards at the operator's or by integrating the CMS with the operator, removing or deactivating Wi-Fi access points, disconnecting the Internet connection or blocking data download on the CMS side. In this case, the infrastructure lighting system will work without the possibility of viewing the data generated by the system and the possibility of reconfiguring the system's operation. For the proper operation of the system, for each local radio communication mesh network Sx, at least three loT controllers 2.xx, equipped with a GPS module for real-time synchronization, should be used.

## Claims

1. An infrastructure lighting system containing loT controllers associated with controllable lighting fixtures, a network gateway that forms a local communication network with the controllers, a server communicated with network devices via an loT gateway and system operation devices, **characterized in that** it includes loT controllers (2.xx) integrated with the luminaires (1) or installed on the luminaire (1) using dedicated, standardized sockets, motion detectors (3.x) and loT gateways (5.X), where the loT gateway (5.X) includes at least two radio communication modules operating in the IEEE802.15.4 standard, while the loT (2.xx) controller includes a radio communication module in the IEEE802.15.4 standard, equipped with a processor and a luminaire control interface in the 1-10V standard, digital in the DALI standard, or universal operating in one of the indicated modes, with each radio communication module of the loT gateway (5.X) working in the IEEE802.15.4 standard, is a node of its own, independent, local short-range radio network in the mesh topology Sx, and the other nodes of this local radio network in the mesh (Sx) topology are radio communication modules connected to it in standard IEEE802.15.4 loT controllers (2.xx), and the information sent in the local mesh radio network (Sx) can be redirected, through the loT network gateway (5.X), to another local radio mesh network Sx created by another radio communication module in the IEEE802.15.4 standard of the same loT gateway (5.X), as well as to the Central Management System (CMS), installed on cloud computing (7) or on a dedicated server, via the Internet or long-range communication module.

2. System according to claim 1, **characterized in that** the motion detector (3.x) is designed to inform the controllable element, the lighting fixture (1) or the controller loT (2.xx) about the fact that motion has been detected in the monitored area.

3. System according to claim 1, **characterized in that** the loT controller (2.xx) is designed to actively keep and control clock time and solar time for any location.

4. System according to claim 1, **characterized in that** the loT controller (2.xx) is designed to store a plurality of at least ten individual schedules for the operation of the lighting fixtures, each schedule being defined in clock or solar or mixed time.

5. System according to claim 1, **characterized in that** the loT controller (2.xx) is associated with an illuminance sensor.

6. System according to claim 1, **characterized in that** the loT controller (2.xx) is equipped with an external light sensor.

7. The system according to claim 1, **characterized in that** the loT controller (2.xx) is equipped with a power supply parameter measurement system, which provides the CMS with information containing the actual power supply parameters of the luminaire, such as: current consumed, supply voltage, active power, reactive power, apparent power, cumulative active energy, cumulative reactive energy, power factor, frequency and detected emergency states based on the actual power supply parameters of the system components.

8. System according to claim 1 and 6, **characterized in that** the measurement error of the power parameter measurement system is not greater than 1 percent of the measuring range.

9. System according to claim 1, **characterized in that** the loT controller (2.xx) is equipped with a relay for switching on and off the lighting fixture.

10. System according to claim 1, **characterized in that** the loT controller (2.xx) is equipped with a GPS module.

11. System according to claim 1, **characterized in that** the loT controller (2.xx) is equipped with a long-range communication module in the 2G, 3G, 4G, 5G technologies.

12. System according to claim 1, **characterized in that** the loT gateway (5.X) comprises a long-range communication module in the 2G-GPRS or 3G-UMTS or 4G-LTE standard.

13. System according to claim 1, **characterized in that** the IoT gateway (5.X) comprises 2 to 6 radio communication modules operating in the IEEE802.15.4 standard.

14. The system according to claim 1, **characterized in that** the network gateway is mounted on the lighting pole or in the lighting cabinet (4).

15. System according to claim 1, **characterized in that** the infrastructure lighting system (9) operating device is a laptop, tablet or mobile phone, equipped with a web browser or a mobile application.

16. The adaptive lighting management method, **characterized in that** for each loT controller (2.xx) associated with the lighting fixture (1) or for a group of loT controllers (2.xx) belonging to a specific motion detector (3.x), ther is a defined response to the signal of the motion detector (3.x) or from multiple motion detectors (3.x) in the Central Management System (CMS), then each loT controller (2.xx) for which the reaction to the signal from the motion detector (3.x) has been defined recognizes presence and activity of the motion detector (3.x) based on the information referred to as "life signal" sent by each IoT controller (2.xx) in a defined time interval, preferably not longer than 3 minutes, where said "life signal" sent by the loT controller (2.xx) is interpreted in the network associated with the loT controller (2.xx) and by the loT gateway (5.X), which sends this information to other local mesh networks managed by this loT gateway (5.X), as well as to the Central Management System (CMS), if so it results from the affiliations assigned to this detector, and based on the signal from the motion detector (3.x), the loT controller (2.xx) triggers the action of switching the lighting from the idle state to the operating state, with whereby both states are defined at the CMS system level, independently for each group of luminaires (1), same as the time intervals in which the adaptive lighting mode should be active.

17. A method according to claim 16, **characterized in that** the loT controller (2.xx) with an assigned action on data from the motion detector (3.x) interprets the "signal of life" from the controller physically associated with the motion detector (3.x) and in the case of the absence of such a signal switches the associated lighting fixture (1) into active state.

18. The method according to claim 16, **characterized in that** the loT controller (2.xx) associated with the motion detector (3.x) collects statistical information on the triggers' density of the motion detector (3.x) around the clock, while all loT controllers (2.xx), in which the adaptive mode is activated, collect statistical data on the response density, which data is sent to the Central Management System CMS along with the regular loT controller (2.xx) reports.

19. The method according to claim 16, **characterized in that** the principles of adaptive lighting operation are defined in the Central Management System (CMS) for such parameters as: adaptive mode operation hours, affiliation of groups of controllers to detectors, idle and active values in adaptive mode, uphold time, detector deactivation time, projected speed of the objects movement.

20. Method according to claim 18, **characterized in that** the Central Management System (CMS) informs the user by means of icons and alerts that it has not received the "life signal" information from the controller within 7 minutes from the last information about the status of each loT controller (2.xx).
